# EUROPÄISCHE PATENTANMELDUNG

(11) **EP 0 897 822 A2**
(43) Veröffentlichungstag der Anmeldung: **24.02.1999**
(21) Anmeldenummer: 98113854.8
(22) Anmeldetag: 24.07.1998
(51) Int. Cl.: B60J 7/10, B60J 7/185

(54) **Verschlusseinrichtung**

(30) Priorität: 22.08.1997 DE 19736508
(71) Anmelder: Fairchild Fasteners Europe - Camloc GmbH, 65779 Kelkheim (DE)
(72) Erfinder: Böffert, Mirko, 65929 Frankfurt am Main (DE); Wolf, Joachim, 60431 Frankfurt am Main (DE)
(74) Vertreter: KEIL & SCHAAFHAUSEN Patentanwälte

(57) **Zusammenfassung**

Die Erfindung bezieht sich auf einen Verschluß für das lösbare Verbinden zweier Bauteile (H,K), mit einer Karosserie, mit einer an dem ersten Bauteil (H) zu befestigenden Verbindungseinrichtung (2) und einer an dem zweiten Bauteil (K) zu befestigenden Aufnahmeeinrichtung (4), wobei die Verbindungseinrichtung (2) einen in einer Durchgangsbohrung (6) eines verdrehsicher an dem ersten Bauteil (4) festgelegten hohlzylindrischen Lagers (8) drehbar aufgenommenen Verschlußzapfen (10) eines Verschlußelements (12) aufweist, wobei der Verschlußzapfen (10) an seinem freien Ende Arretierungszapfen (14) aufweist, welche in eine Einführungsaussparung der Aufnahmeeinrichtung axial einsetzbar und unter Winkelverdrehung des Verschlußzapfens (10) bis in eine sich an die Einführungsaussparung (16) anschließende Rastaussparung (18) überführbar sind, und wobei sich die Aufnahmeeinrichtung (4) derart federelastisch an dem Lagerteil (8) abstützt, daß die Arretierungszapfen (14) federbelastet in ihrer Raststellung gehalten sind, wenn sich das Verschlußelement (12) in Verschlußstellung befindet, wobei das Lager von einer Hohlschraube, welche sich mit einem oberen Kopfabschnitt (20) von oben auf dem ersten Bauteil (H) abstützt und mit einem ein Außengewinde aufweisenden Schaftabschnitt (22) eine Durchgangsöffnung (34) in dem ersten Bauteil (H) durchragt, und einer Gegenmutter gebildet ist, welche auf den Schaftabschnitt (22) der Hohlschraube (8') aufschraubbar ist, bis sie sich mit einem oberen Kopfabschnitt (20) von unten an dem ersten Bauteil (H) abstützt.

## Beschreibung

Die Erfindung bezieht sich auf einen Verschluß für das lösbare Verbinden zweier Bauteile, insbesondere zweier Fahrzeugteile, wie eines Hardtop mit einer Karosserie, mit einer an dem ersten Bauteil zu befestigenden Verbindungseinrichtung und einer an dem zweiten Bauteil zu befestigenden Aufnahmeeinrichtung, wobei die Verbindungseinrichtung einen in einer Durchgangsbohrung eines verdrehsicher an dem ersten Bauteil festgelegten hohlzyindrischen Lagers drehbar aufgenommenen Verschlußzapfen eines Verschlußelements aufweist, wobei der Verschlußzapfen an seinem freien Ende Zum Beispiel von einem Kreuzstift gebildete Arretierungszapfen aufweist, welche in eine Einführungsaussparung der Aufnahmeeinrichtung axial einsetzbar und unter Winkelverdrehung des Verschlußzapfens bis in eine sich an die Einführungsaussparung anschließende Rastaussparung überführbar sind und wobei sich die Aufnahmeeinrichtung derart federelastisch an dem Lagerteil abstützt, daß die Arretierungszapfen federbelastet in ihrer Raststellung gehalten sind, wenn sich das Verschlußelement in Verschlußstellung befindet.

Ein solcher zum Beispiel aus DE 36 40 483 C1 bekannter Verschluß dient u.a. zum lösbaren Verbinden eines Hardtops mit einer Fahrzeugkarosserie. Der bekannte Verschluß weist dabei ein an dem Hardtop angebrachtes Verbindungsteil und ein an der Fahrzeugskarosserie befestigtes Aufnahmeteil auf. Das Verbindungsteil hat eine Gewindehülse, in deren Durchgangsbohrung ein Führungsbolzen drehbar gelagert ist, während die Gewindehülse über auf ihr Außengewinde von oben und unten aufgeschraubte Muttern am Hardtop festgelegt ist. Der Führungsbolzen hat ferner zwei radial abstehende Arretierzapfen, welche jeweils in eine in dem hohlzylindrischen Aufnahmeteil angeordnete Einführöffnung eingreifen. An diese schließt sich jeweils eine Führungsschulter an, die in Rastausnehmungen übergehen. Durch eine Winkeldrehung des Führungsbolzens um seine Längsachse gleiten die Arretierungszapfen über die Führungsschultern und greifen schließlich in die Rastausnehmungen ein, wobei den Führungsbolzen umgebende Tellerfedern vorgespannt werden, so daß die Arretierungszapfen federbelastet festliegen.

Aufgabe der vorliegenden Erfindung ist es, einen Verschluß der bekannten Art so weiterzubilden, daß er einfacher in der Montage und in der Bedienung ist.

Diese Aufgabe wird zum Beispiel dadurch gelöst, daß das Lager von einer Hohlschraube, welche sich mit einem oberen Kopfabschnitt von oben auf dem ersten Bauteil abstützt und mit einem ein Außengewinde aufweisenden Schaftabschnitt eine Durchgangsöffnung in dem ersten Bauteil durchragt, und einer Gegenmutter gebildet ist, welche auf den Schaftabschnitt der Hohlschraube aufschraubbar ist, bis sie sich mit einem oberen Kopfabschnitt von unten an dem ersten Bauteil abstützt.

Vorzugsweise stützten sich dabei die Kopfabschnitte von Hohlschraube und Gegenmutter unter Zwischenlage von Unterlegscheiben an dem ersten Bauteil ab, so daß der Durchmesser der Kopfabschnitte kleiner sein kann als der Durchmesser der Durchgangsöffnung, in welchem die Hohlschraube mit seitlichem Spiel, zum Tolerantausgleich, aufgenommen ist.

Zur weiteren Stabilisierung der Verbindungseinrichtung weist die Gegenmutter eine die Hohlschraube umgreifende Verlängerung auf, welche im wesentlichen bis zum unteren Ende des Schaftabschnitts der Hohlschraube reicht.

Damit sich die Hohlschraube beim Aufdrehen der Gegenmutter nicht mitdreht, durchgreift sie mit einem unrunden Kragen die entsprechend unrunde Durchgangsöffnung des ersten Bauteils. Dabei weisen der Kragen und die Durchgangsöffnung beispielsweise an zwei einander gegenüberliegenden Seiten zueinander passende abgeflachte Bereiche auf.

Gemäß einer weiteren vorteilhaften Ausgestaltung der Erfindung ist zwischen einer nach oben weisenden Anlageschulter des Verschlußzapfens und einer nach unten weisenden, zum Beispiel von der unteren Stirnfläche des Lagers gebildeten Anlageschulter ein federelastisches Element, zum Beispiel in Form von Tellerfedern, schraubenlinienförmigen Druckfedern und/oder Hydropneumatikelementen, angeordnet, wobei sich das Verschlußelement unter Vorspannung des federelastischen Elements an einer nach oben weisenden Anlagefläche an dem Lager abstützt. Das Verschlußelement wird so von dem federelastischen Element in seiner vollständig in das Lager eingeführten Verschlußstellung vorgespannt gehalten.

Dabei kann die Anlagefläche von der oberen Stirnfläche der Hohlschraube gebildet sein.

Das Verschlußelement stützt sich vorteilhafterweise mittels zum Beispiel von einem Kreuzstift gebildeter radialer Anlagezapfen an der Anlagefläche des Lagers ab.

Eine weitere Verbesserung wird dadurch erzielt, daß die Anlagefläche des Lagers eine Quernut für die Aufnahme der Anlagezapfen in Offenstellung des Verschlußelements aufweist.

Hierdurch wird der Verschlußzapfen in der Offenstellung zuverlässig unter Ausnutzung der axialen Federkraft des federelastischen Elements eingerastet gehalten und der Benutzer kann ohne weiteres feststellen, wenn das Verschlußelement die endgültige Offenstellung erreicht hat, in welcher dieser rastungsgestützt gehalten wird.

Insbesondere kann sich das federelastische Element über eine Ringscheibe an der Anlageschulter des Verschlußzapfens großflächig abstützen.

Der Einfachheit halber kann die Anlageschulter des Verschlußzapfens von einer Führungskappe mit einem kreiskegelförmigen Endabschnitt gebildet sein, welche auf dem unteren Ende des Verschlußzapfens, zum Beispiel mittels der Arretierzapfen, gehalten ist. Die Führungskappe kann beispielsweise aus Kunststoff bestehen, so daß beim Aufsetzen des Hardtops auf die Karosserie keine Schäden, insbesondere keine Lackschäden auftreten, dennoch aber die Einführung des Verschlußzapfens in die Durchgangsbohrung des Lagers erleichtert ist.

Bei dem erfindungsgemäßen Verschluß kann sich ferner in an sich bekannter Weise die Verbindungseinrichtung in Verschlußstellung des Verschlußelements mit dem Lager über das federelastische Element, ggf. unter Zwischenlage der Ringscheibe, an der Aufnahmeeinrichtung abstützen. Auf diese Weise wird eine rüttelfreie Verbindung zwischen erstem und zweitem Bauteil geschaffen.

Das Verschlußelement kann an seinem oberen aus dem Lager herausragenden Ende eine Handhabe aufweisen, welche beispielsweise die Form eines von dem Verschlußzapfen seitlich abgewinkelten Hebels haben kann. Mit dieser Handhabe kann der Verschlußzapfen ohne Werkzeug aus seiner Offenstellung in die Verschlußstellung gedreht werden, in welcher die Arretierzap fen in die Rastaussparung der Aufnahmeeinrichtung einrasten.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: schematisch in Schrägansicht eine die Erfindung aufweisende Verbindungseinrichtung,
- Fig. 2: eine zu der Verbindungseinrichtung von Fig. 1 passende Aufnahme-einrichtung, ebenfalls schematisch in Schrägansicht,
- Fig. 3: die Verbindungseinrichtung von Fig. 1 teilweise vertikal geschnitten, und
- Fig. 4: die Verbindungseinrichtung gemäß den Fig. 1 und 3 bei auseinandergezogenen Teilen.

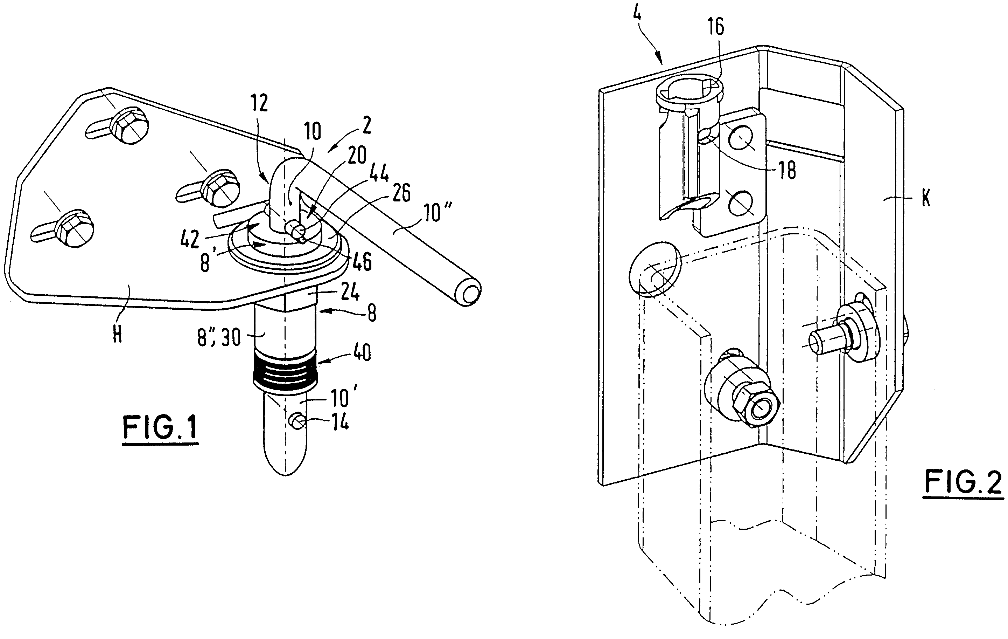

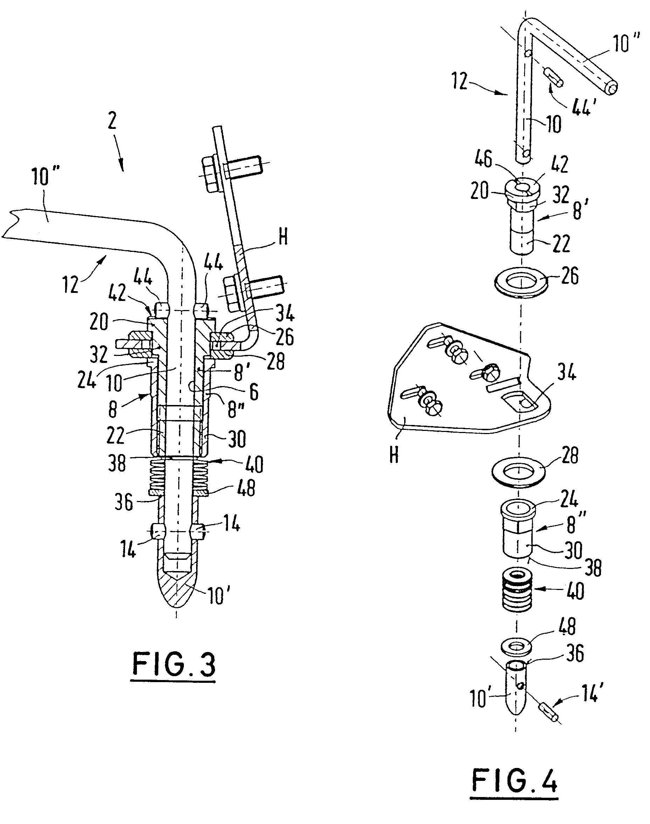

Die Verbindungseinrichtung 2 gemäß den Darstellungen in den Fig. 1, 3 und 4 ist an einem ersten Bauteil H, welches beispielsweise ein mit einem Hardtop verschraubbarer Blechwinkel oder das Hardtop selbst sein kann, lösbar gehalten. Die Aufnahmeeinrichtung 2 gemäß Fig. 2 ist an einem zweiten Bauteil K lösbar befestigt, welches eine Halterung an der Karosserie oder die Karosserie selbst sein kann. Die Verbindungseinrichtung 2 dient in Zusammenwirken mit der Aufnahmeeinrichtung 4 einer lösbaren Verbindung des ersten Bauteils H mit dem zweiten Bauteil K.

Die Verbindungseinrichtung 2 weist einen in einer Durchgangsbohrung 6 eines hohlzylindrischen Lagers 8 drehbar aufgenommenen Verschlußzapfen 10 eines Verschlußelements 12 auf. Der Verschlußzapfen 10 ist in dem Lager 8 um seine Längsachse drehbar. Der Verschlußzapfen 10 hat ferner an seinem freien Ende von einem Kreuzstift 14' gebildete, nach zwei einander gegenüberliegenden Seiten radial wegstehende Arretierzapfen 14, welche in eine Einführungsaussparung 16 der Aufnahmeeinrichtung 4 (vgl. Fig. 2) axial einsetzbar und unter Winkelverdrehung des Verschlußzapfens 10 bis in eine sich an die Einführungsaussparung 16 anschließende Rastaussparung 18 überführbar sind. Hierbei stützt sich die Aufnahmeeinrichtung 4 derart federelastisch an dem Lagerteil 8 ab, daß die Arretierungszapfen 14 federbelastet in ihrer Raststellung gehalten sind, wenn sich das Verschlußelement 12 in Verschlußstellung befindet.

Das Lager 8 weist eine Hohlschraube 8' mit einem oberen erweiterten Kopfabschnitt 20 und einem ein Außengewinde aufweisenden Schaftabschnitt 22 auf. Die Hohlschraube 8' stützt sich mit dem Kopfabschnitt 20 über eine Unterlegscheibe 26 von oben auf dem ersten Bauteil H ab, während der Schaftabschnitt 22 durch eine Durchgangsöffnung 34 des ersten Bauteils H hindurchragt. Auf das Außengewinde des Schaftabschnitts 22 kann eine Gegenmutter 8'' bis zur Anlage an dem ersten Bauteil H bzw. einer Unterlegscheibe 28 aufgeschraubt werden. Die Unterlegscheiben 26, 28 haben eine Öffnung, welche in ihrem Querschnitt im wesentlichen dem Außenquerschnitt des Verschlußzapfens 10 im Bereich des Durchtritts durch das erste Bauteil H entspricht, und einen Außendurchmesser, welcher überall größer ist als der größte Durchmesser der Durchgangsöffnung 34. Auf diese Weise kann das Lager 8 mit seitlichem Spiel in der gegenüber dem Außendurchmesser der Hohlschraube 8' mit erweiterten Durchmesser ausgestatteten Durchgangsöffnung 34 an dem ersten Bauteil H festgelegt sein.

Die Gegenmutter 8'' weist eine die Hohlschraube 8' umgreifende Verlängerung 30 auf, welche im wesentlichen bis zum unteren Ende des Schaftabschnitts 22 der Hohlschraube 8' reicht.

Bei der in den Fig. 1, 3 und 4 gezeigten Ausführung ist zwischen einer nach oben weisenden Anlageschulter 36 des Verschlußzapfens 10 und einer nach unten zum Beispiel von der unteren Stirnfläche des Lagers 8 gebildeten Anlageschulter 38 ein federelastisches Element 40 angeordnet. Auf diese Weise stützt sich das Verschlußelement 12 unter Vorspannung des federelastischen Elements 40 an einer nach oben weisenden Anlagefläche 42 an dem Lager 8 ab. Die Anlagefläche 42 ist von der oberen Stirnfläche der Hohlschraube 8' gebildet und das Verschlußelement 12 stützt sich mittels von einem Kreuzstift 44' gebildeten Anlagezapfen 44 an dieser oberen Stirnfläche ab. Die Anlagefläche 42 des Lagers 8 hat dabei eine Quernut 46 für die rastende Aufnahme der Anlagezapfen 44 in Offenstellung des Verschlußelements 12.

Das federelastische Element 40 stützt sich über eine Ringscheibe 48 an der Anlageschulter 36 des Verschlußzapfens 10 ab. Dabei ist die Anlageschulter 36 des Verschlußzapfens 10 von einer Führungskappe 10' aus Kunststoff gebildet, welche auf dem unteren Ende des Verschlußzapfens 10 mittels der Arretierzapfen 14 gehalten ist. Die Verbindungseinrichtung 2 stützt sich in Verschlußstellung des Verschlußelements 12 mit dem Lager 8 über das federelastische Element 40 und die Ringscheibe 48 an der Aufnahmeeinrichtung 4 ab, wodurch die Arretierzapfen 14 federvorgespannt in den Rastaussparungen 18 der Aufnahmeeinrichtung 4 gehalten sind, wenn der Verschlußzapfen 10 in Verschlußstellung gedreht wurde.

An dem aus dem Lager 8 herausragenden Ende ist das Verschlußelement 12 in Form eines von dem Verschlußzapfen 10 seitlich abgewinkelten Hebels zur Bildung einer Handhabe 10'' abgewinkelt. Auf diese Weise läßt sich das Verschlußelement 12 ohne Werkzeug zwischen der Öffnungsstellung und der Verschlußstellung bewegen.

### Bezugszeichenliste:

- 2: Verbindungseinrichtung
- 4: Aufnahmeeinrichtung
- 6: Durchgangsbohrung
- 8: Lager
- 8': Hohlschraube
- 8'': Gegenmutter
- 10: Verschlußzapfen
- 10': Führungskappe
- 10'': Handhabe
- 12: Verschlußelement
- 14: Arretierungszapfen
- 14': Kreuzstift
- 16: Einführungsaussparung
- 18: Rastaussparung
- 20: Kopfabschnitt der Hohlschraube 8'
- 22: Schaftabschnitt
- 24: Kopfabschnitt der Gegenmutter 8''
- 26: Unterlegscheibe
- 28: Unterlegscheibe
- 30: Verlängerung
- 32: Kragen
- 34: Durchgangsöffnung
- 36: Anlageschulter des Verschlußzapfens 10
- 38: Anlageschulter des Lagers 8
- 40: federelastisches Element
- 42: Anlagefläche des Lagers 8
- 44: Anlagezapfen
- 44': Kreuzstift
- 46: Quernut
- 48: Ringscheibe
- H: erstes Bauteil
- K: zweites Bauteil

## Patentansprüche

1. Verschluß für das lösbare Verbinden zweier Bauteile (H, K), insbesondere zweier Fahrzeugteile, wie eines Hardtop mit einer Karosserie, mit einer an dem ersten Bauteil (H) zu befestigenden Verbindungseinrichtung (2) und einer an dem zweiten Bauteil (K) zu befestigenden Aufnahmeeinrichtung (4), wobei die Verbindungseinrichtung (2) einen in einer Durchgangsbohrung (6) eines verdrehsicher an dem ersten Bauteil (H) festgelegten hohlzylindrischen Lagers (8) drehbar aufgenommenen Verschlußzapfen (10) eines Verschlußelements (12) aufweist, wobei der Verschlußzapfen (10) an seinem freien Ende zum Beispiel von einem Kreuzstift (14') gebildete Arretierungszapfen (14) aufweist, welche in eine Einführungsaussparung (16) der Aufnahmeeinrichtung (4) axial einsetzbar und unter Winkelverdrehung des Verschlußzapfens (10) bis in eine sich an die Einführungsaussparung (16) anschließende Rastaussparung (18) überführbar sind, und wobei sich die Aufnahmeeinrichtung (4) derart federelastisch an dem Lagerteil (8) abstützt, daß die Arretierungszapfen (14) federbelastet in ihrer Raststellung gehalten sind, wenn sich das Verschlußelement (12) in Verschlußstellung befindet, **dadurch gekennzeichnet**, daß das Lager (8) von einer Hohlschraube (8'), welche sich mit einem oberen Kopfabschnitt (20) von oben auf dem ersten Bauteil (H) abstützt und mit einem ein Außengewinde aufweisenden Schaftabschnitt (22) eine Durchgangsöffnung (34) in dem ersten Bauteil (H) durchragt, und einer Gegenmutter (8'') gebildet ist, welche auf den Schaftabschnitt (22) der Hohlschraube (8') aufschraubbar ist, bis sie sich mit einem oberen Kopfabschnitt (24) von unten an dem ersten Bauteil (H) abstützt.

2. Verschluß nach Anspruch 1, **dadurch gekennzeichnet**, daß sich die Kopfabschnitte (20, 24) von Hohlschraube (8') und Gegenmutter (8'') unter Zwischenlage von Unterlegscheiben (26, 28) an dem ersten Bauteil (H) abstützen.

3. Verschluß nach Anspruch 1 oder 2, **dadurch gekennzeichnet**, daß die Gegenmutter (8'') eine die Hohlschraube (8') umgreifende Verlängerung (30) aufweist, welche im wesentlichen bis zum unteren Ende des Schaftabschnitts (22) der Hohlschraube (8') reicht.

4. Verschluß nach einem der vorhergehenden Ansprüche, **dadurch gekennzeichnet**, daß die Hohlschraube (8') mit einem unrunden Kragen (32) die entsprechend unrunde Durchgangsöffnung (34) des ersten Bauteiles (H) durchgreift.

5. Verschluß nach einem der vorhergehenden Ansprüche, **dadurch gekennzeichnet**, daß zwischen einer nach oben weisenden Anlageschulter (36) des Verschlußzapfens (10) und einer nach unten weisenden, zum Beispiel von der unteren Stirnfläche des Lagers (8) gebildeten Anlageschulter (38) ein federelastisches Element (40) angeordnet ist und sich das Verschlußelement (12) unter Vorspannung des federelastischen Elements (40) an einer nach oben weisenden Anlagefläche (42) an dem Lager (8) abstützt.

6. Verschluß nach Anspruch 5, **dadurch gekennzeichnet**, daß die Anlagefläche (42) von der oberen Stirnfläche der Hohlschraube (8') gebildet ist.

7. Verschluß nach Anspruch 5 oder 6, **dadurch gekennzeichnet**, daß sich das Verschlußelement (12) mittels zum Beispiel von einem Kreuzstift (44') gebildeter Anlagezapfen (44) an der Anlagefläche (42) des Lagers (8) abstützt.

8. Verschluß nach einem der Ansprüche 5 bis 7, **dadurch gekennzeichnet**, daß die Anlagefläche (42) des Lagers (8) eine Quernut (46) für die Aufnahme der Anlagezapfen (44) in Offenstellung des Verschlußelements (12) aufweist.

9. Verschluß nach einem der Ansprüche 5 bis 8, **dadurch gekennzeichnet**, daß sich das federelastische Element (40) über eine Ringscheibe (48) an der Anlageschulter (36) des Verschlußzapfens (10) abstützt.

10. Verschluß nach Anspruch 9, **dadurch gekennzeichnet**, daß die Anlageschulter (36) des Verschlußzapfens (10) von einer Führungskappe (10') gebildet ist, welche auf dem unteren Ende des Verschlußzapfens (10), zum Beispiel mittels der Arretierzapfen (14), gehalten ist.

11. Verschluß nach einem der Ansprüche 5 bis 10, **dadurch gekennzeichnet**, daß sich die Verbindungseinrichtung (2) in Verschlußstellung des Verschlußelements (12) mit dem Lagerteil (8) über das federelastische Element (40), ggf. unter Zwischenlage der Ringscheibe (48), an der Aufnahmeeinrichtung (4) abstützt.

12. Verschluß nach einem der vorhergehenden Ansprüche, **dadurch gekennzeichnet**, daß das Verschlußelement (12) an seinem oberen aus dem Lager (8) herausragenden Ende eine Handhabe (10''), zum Beispiel in Form eines von dem Verschlußzapfen (10) seitlich abgewinkelten Hebels, aufweist.
